# EUROPEAN PATENT SPECIFICATION

(11) **EP 1 063 883 B1**
(45) Date of publication and mention of the grant of the patent: **16.10.2002**
(21) Application number: 99910529.9
(22) Date of filing: 18.03.1999
(51) Int. Cl.: A01N 25/04

(54) **PESTICIDAL ADJUVANTS**
PESTIZIDE HILFSMITTEL
ADJUVANTS PESTICIDES

(30) Priority: 20.03.1998 GB 9806088; 20.03.1998 GB 9806089; 20.03.1998 GB 9806090
(43) Date of publication of application: 03.01.2001
(73) Proprietor: Dow Agrosciences LLC, Indianapolis, Indiana 46268-1054 (US)
(72) Inventor: FOWLES, Andrew Mark, Bicester, Oxfordshire OX6 0SY (GB); DIXON, Keith Roderick, Faringdon, Oxfordshire SN7 7TJ (GB); MULQUEEN, Patrick Joseph, Abingdon, Oxfordshire OX14 3YJ (GB); BANKS, Graham, Faringdon, Oxfordshire SN7 7RN (GB)
(74) Representative: Raynor, John
(86) International application number: GB9900837
(87) International publication number: WO99048359

(56) References cited:
- WO-A-93/22917
- WO-A-98/09518
- DE-A- 3 545 908
- DE-A- 4 229 442
- US-H- H 224

## Description

This invention relates to particulate suspensions of pesticides in water.

It is well known to apply pesticides to crops in the form of an emulsion. However, in the preparation of pesticide emulsions, it is generally necessary to employ an organic solvent (for example, xylene). Fears about the damage that such solvents can cause to the environment have prompted the search for other ways of formulating pesticides, which avoid or reduce the use of solvents.
Additionally, some pesticides have only limited solubility in the solvents which are generally employed, so have to be formulated in another way.

One way in which the use of organic solvents can be reduced, is by formulating pesticides as particulate suspensions, for example in an aqueous phase. However, in many cases, the biological efficacy of particulate suspensions of pesticidal actives is very low. it is conventional in order to raise the biological efficacy of such particulate suspensions to employ an adjuvant, which is thought to increase the biological availability of the pesticide. Typical adjuvants used for such purposes are surface active materials, such as alcohol ethoxylates, amine ethoxylates, ethylene oxide/propylene oxide block copolymers, alcohol sulphates, alkylaryl sulphonates, alkylsulphonates, alkylphenol ethoxylates, ester ethoxylates, castor oil ethoxylates or alkanolamides.

Although the use of adjuvants is very effective in increasing the biological efficacy of pesticidal actives, their use in pesticidal formulations which are "one-pack" particulate suspensions generally gives rise to crystal growth (e.g., by means of Ostwald ripening). Crystal growth can occur over the relatively short period of time for which a particulate suspension is stored before use.

Crystal growth by Ostwald ripening generally occurs when smaller crystals (which have a greater total area than larger crystals) dissolve in the continuous phase, and the active material is transported through the continuous phase, to nucleation sites (such as the larger crystals). In addition, aggregation effects can compound sedimentation in and non-homogeneity of the formulation, i.e., the crystals can "clump" together.

Stability problems can also occur in a particulate suspension of a pesticide which does not require an adjuvant, if the formulation also comprises a second pesticide, and an adjuvant is added in order to increase the biological efficacy of the second pesticide. The second pesticide may be dissolved in an aqueous phase and/or dispersed in a non-aqueous phase, or present as a particulate suspension itself.

The inherent instability to storage of particulate suspensions of pesticides formulated with adjuvants has meant that such particulate suspensions have to be used very soon after formulation, which is commercially unsatisfactory. Alternatively, the product and an adjuvant have to be provided separately in a twin-pack, or the use of commercial adjuvant in addition to the product has to be recommended, in order that the adjuvant can be mixed into the particulate suspension or spray tank shortly before it is used. However, it would be more convenient if a storage-stable one-pack formulation of adjuvant and product could be provided.

It has now been discovered that when alkyl polyglycosides are employed as adjuvants for pesticidal compositions which are particulate suspensions, surprisingly their use does not cause significant crystal growth.

By "alkylpolyglycoside" is meant a chain of one or more saccharide units linked by glycoside bonds which terminates in an alkyl group joined to the terminal saccharide unit by a glycoside bond.

WO-A-9803065 (Dow AgroSciences) discloses a process for preparing a storage-stable aqueous dispersion of microcapsules comprising a supersaturated solution or a supercooled melt of a water-insoluble material (such as a pesticide). The dispersion is stabilised with a non-micellising surfactant, that is a surfactant which does not form micelles under the conditions used tc store the stabilised dispersion. There is no suggestion in the reference of the use of alkyl polyglycoside adjuvants.

It has previously been known to use alkyl polyglycosides as adjuvants in the agricultural industry. For example, Henkel supplies alkyl polyglycoside adjuvants under the trade name Agrimul™, and Unquema supplies alkyl polyglycoside adjuvants under the trade name Atplus™.

A number of references disclose the use of alkyl polyglycosides as adjuvants (or dispersing agents) for pesticides, for example US 4888325 (Henkel KgaA) and US Statutory Invention Regulation H224 (Malik *et al.*). DE-A-4229442 (Henkel KgaA) discloses the use of alkyl polyglycosides as biodegradable dispersants in the preparation of dye and pigment compositions. WO 93/22917 (Henkel Corp.) describes the addition of fatty alcohols to alkyl polyglycosides in order to improve wetting ability and the use of aliphatic monoglucosides as adjuvants. DE-A-3 545 908 (Henkel KgaA) discloses the use of alkyl polyglycosides to improve the stability of emulsions and suspensions in agrochemical preparations. WO 98/09518 (Henkel Corp.) relates to the use of additives to improve the tactile and aesthetic properties of alkyl polyglycosides and to prevent their crystallising.
However, it has not previously been realised that, alkyl polyglycosides can be employed as adjuvants without causing significant crystal growth of the product formulation.

In accordance with the invention, there is provided the use of an alkyl polyqlycoside of general formula [1] 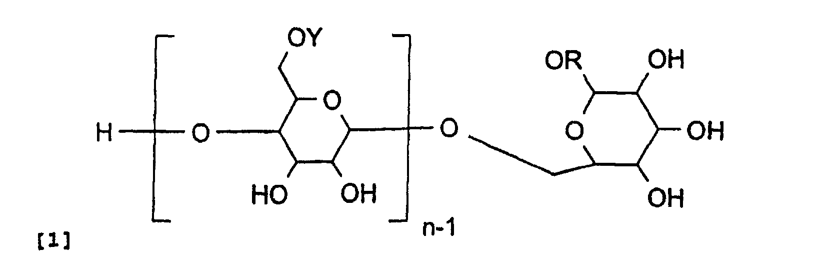 in a formulation comprising an aqueous particulate suspension of at least one pesticide, as a non-crystal-growth-promoting pesticidal adjuvant,
wherein
R is a C₄-C₂₀ alkyl group
n is from 1 to 10,
and Y is H, C₁-C₂₀ alkyl, or a group of the formula (C_{q}H_{2q}O)_{z}X, -SO₃M, -PO₃X₂, -COCH₂CH[SO₃M]COOX, -COX, -(CH₂)ₚCOOX, -CH₂CH₂SO₃M, -COOX, a quaternary ammonium derivative, or a glycerol residue,
wherein z is from 1 to 50
p is from 1 to 20
q is from 2 to 4
M is H or a suitable counter-ion,
and each X independently is H or C₁-C₂₀ alkyl.

R is preferably a C₈-C₁₈ alkyl group, and n is preferably from 1 to 3. M may be, for example, H or an ammonium, substituted ammonium (e.g., ammonium substituted with from 1 to 4 C₁-C₆ alkyl groups) ammonium, sodium, potassium, or magnesium ion. Preferably, Y in formula 1 is H.

The term "pesticide" as used herein means any substance which destroys or protects against pests, (i.e, harmful organisms, particularly organisms which are harmful to crops or plants). The term "pesticide" therefore encompasses insecticides, herbicides, fungicides and acaricides.

The pesticide may be any pesticide which can be formulated as a particulate suspension. The invention is particularly applicable to pesticides having a solubility in water of not more than 600ppm, more particularly not more than 150ppm, and most particularly not more than 50ppm. The invention is also particularly applicable to pesticides having a melting point of at least 55°C, more particularly at least 77°C, and most particularly at least 100°C.

Suitable fungicidal, herbicidal and insecticidal materials having a melting point of at least 55°C and a solubility in water of not more than 600ppm are listed below. In the tables, the names and identifiers are taken from the Pesticide Manual, 11^{th} edition.

Suitable fungicidal materials having a melting point of at least 55°C
and a solubility in water of not more than 600ppm include the following:

| | **Fungicides** | |
|---|---|---|
| amitrole (<ph4.2) | azaconazole (<ph3) | azoxystrobin |
| benalaxyl | benomyl | bitertanol |
| bromocunazole | captafol | captan |
| carbendazim | carboxin | chinomethionate |
| chlorothalonil | chlozolinate | copper oxychloride |
| cuprous oxide | cyproconazole | cyprodinil |
| dichlofluanid | dichlorophen | diclomezine |
| dicloran | diethofencarb | difenoconazole |
| dimethomorph | diniconazole | dinobuton |
| dithianon | dodemorph | epoxiconazole |
| ethirimol | famoxadone | fenarimol |
| fenbuconazole | fenfuram | fenpiclonil |
| fentin | ferbam | ferimzone |
| fluazinam | fludioxonil | fluoroimide |
| fluquinconazole | flusulfamide | flutolanil |
| flutriafol | folpet | fuberidazole |
| furalaxyl | hexachlorobenzene | hexaconazole |
| imibenconazole | ipconazole | iprodione |
| kresoxim-methyl | ktu 3616 | mancozeb |
| maneb | Mepanipyrim | mepronil |
| mercuric oxide | Mercurous chloride | metconazole |
| methasulfocarb | Metiram | myclobutanil |
| nickel bis(dimethyldithioc arbamate) | Nitrothal-isopropyl | nuarimol |
| ofurace | oxine-copper | penconazole |
| pencycuron | Pentachlorophenol | phthalide |
| probenazole | Promcymidone | propineb |
| pyributicarb | Pyrimethanil | quinoxyfen |
| quintozene | ssf-126 | sulphur |
| tebuconazole | Tecnazene | thiabendazole |
| thifluzamide | Thiophanate-methyl | thiram |
| tolclofos-methyl | Tolylfluanid | triadimefon |
| triadimenol | Triazoxide | triforine |
| triticonazole | Vinclozolin | zineb |
| ziram | | |

and strobilurin analogues i.e., a compound of the formula [2] 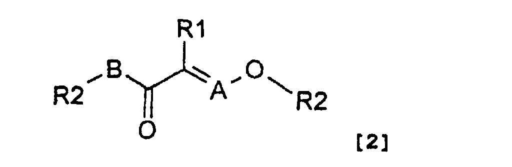 wherein R1 is an aromatic or heteraromatic group, preferably a phenyl or substituted phenyl (in particular phenyl substituted with 2-methylphenoxymethylene or 6-(2-cyanophenoxy) pyrimidin-4-yloxy),
R2 is H, or C₁-C₁₀ alkyl
A is CH or N and
B is O or NH.

Particularly suitable strobilurin analogues include (2[2-(3-trifluoromethyl)-5-chloro-2-pyridyloxymethyl)phenyl]-2-methoxyimino-N-methylacetamide, kresoxim methyl, and azoxystrobin.

Suitable insecticidal (or acaricidal) materials having a melting point of at least 55°C and a solubility in water of not more than 600ppm include the following:-

| **Insectides/acaricides** | | |
|---|---|---|
| abamectin | acrinathrin (i/a) | amitraz |
| | azinphos-methyl | azocyclotin |
| bensultap | benzoximate (a) | bifenthrin (i/a) |
| bromopropylate | buprofezin | carbaryl |
| carbofuran | chinomethionat (a) | chlordane |
| chlorfenapyr (i/a) | chlorfluazuron | clofentezine (a) |
| coumaphos | cryolite | cyfluthrin |
| beta-cyfluthrin | cyhexatin (a) | cypermethrin |
| alpha-cypermethrin | beta-cypermethrin | theta-cypermethrin |
| d2341 (a) | deltamethrin | diafenthiuron (i/a) |
| dicofol (a) | dienochlor (a) | diflubenzuron |
| dimethylvinphos | dinobuton (a) | dpx-jw062/dpx-mp062 |
| endosulfan (i/a) | esfenvalerate | etoxazole (a) |
| fenazaquin (i/a) | fenbutatin oxide (a) | fenpyroximate (a) |
| fentin (a) | fipronil | flucycloxuron (i/a) |
| flufenoxuron (i/a) | halofenozide | gamma-hch |
| heptachlor | hexaflumuron | hexathiazox (a) |
| hydromethylnon | isoprocarb | lufenuron (i/a) |
| methiocarb (i/a) | methoxychlor | novaluron |
| pentachlorophenol | phosmet | pymetrozine |
| pyridaben | pyridaphenthion (i/a) | pyrimidifen (i/a) |
| resmethrin | rh-2485 | rotenone |
| spinosad | sulfluramid | szi-121 (a) |
| tebufenozide | tebufenpyrad (a) | teflubenzuron |
| tetrachlorvinphos | tetradifon (a) | tetramethrin |
| thiodicarb | tralomethrin | triflumuron |
| trimethacarb | xmc | xylylcarb |
| (I = insecticide A = acaricide (miticide) | | |
| PGR = plant growth regulator) | | |

Suitable herbicidal materials having a melting point of at least 55°C and a solubility in water of not more than 600ppm include the following:-

| | **Herbicides** | |
|---|---|---|
| ac 94,377 (pgr) | aclonifen | akh-7088 |
| ametryn | amidosulfuron | asulam (<ph4.82) |
| atrazine | azafenidin | azimsulfuron |
| bay foe 5043 | benazolin | benfluaralin |
| bensulfuron-methyl | bentazone | benzofenap |
| bifenox | biphenyl | bromobutide |
| bromofenoxim | bromoxynil | butralin |
| butroxydim | butylate | cafenstrole |
| chlomethoxyfen | chlobomuron | chloridazon |
| chlorimurorn-ethyl | chlorotoluron | chlorsulfuron |
| chlorthal-dimethyl | cinosulfuron | clodinaop-propargyl |
| clomeprop | cloransulam-methyl | cyanzine |
| cyclanilide (pgr) | cyclosulfamuron | 2,4-d acid |
| daimuron | 2,4-db | desmedipham |
| desmetryn | diclobenil | dichlorprop |
| dichlorprop-p | diclofop-methyl | diflufenican |
| dimefuron | dimethmetryn | dinitramine |
| dinoterb | diphenamid | dithiopyr |
| diuron | ethalfluralin | ethametsulfuron-methyl |
| ethofumesate | ethoxysulfuron | ethychlozate (pgr) |
| etobenzanid | fenozaprop-p-ethyl | flamprop-m-isopropyl |
| flamprop-m-methyl | flumetralin (pgr) | flumetsulam |
| flumiclorac-pentyl | fluometuron | fluoroglycofen-ethyl |
| flupoxam | flupyrsulfuron-methyl-sodium | flurenol |
| fluridone | flurochloridone | fluroxypyr |
| flurprimidol (pgr) | flurtamone | fluthiacet-methyl |
| fomesafen | forchlorfenuron (pgr) | halosulfuron-methyl |
| haloxyfop | imazamox | imazaquin |
| imazosulfuron | inabenfide (pgr) | indanofan |
| 4-indol-3-ylbutyric acid (pgr) | ioxynil | isoproturon |
| isouron | isoxaben | isoxaflutole |
| lenacil | linuron | mcpa |
| mcpb | mecoprop | mefenacet |
| mefluidide | metazachlor | methabenzthiazuron |
| methasulfocarb (pgr) | methyldymron | metobenzuron |
| metobromuron | metosulam | metsulfuron-methyl |
| 2-(1-naphthyl)acetamide (pgr) | 2-(1-naphthyl)acetic acid (pgr) | (2-naphthoxy)acetic acid (pgr) |
| naproanilide | napropamide | naptalam |
| neburon | norflurazon | oryzalin |
| oxadiargyl | oxadiazon | oxasulfuron |
| oxyfluorfen | paclobutrazol (pgr) | pendimethalin |
| pentachlorophenol | pentanochlor | pentoxazone |
| phenmedipham | n-phenyiphthlamic acid | picloram |
| primisuluron-methyl | prodiamine | prohexadione-calcium (pgr) |
| prometon | prometryn | propachlor |
| propanil | propaquizafop | propazine |
| propham | propyzamide | prosulfuron |
| pyraflufen-ethyl | pyrazclynate | pyrazosulfuron-ethyl |
| pyributicarb | pyriminobac-methyl | quinclorac |
| quinmerac | quizalofop | quizalofop-p |
| rimsulfuron | siduron | simazine |
| simetryn | sulcotrione | sulfentrazone |
| sulfometuron-methyl | sulfosulfuron | terbumeton |
| terbuthylazine | terbutryn | thenylchlor |
| thiazopyr | thidiazuron (pgr) | thifensulfuron-methyl |
| tralkoxydim | triasulfuron | tribenuron-methyl |
| triclopyr | trietazine | trisulfuron-methyl |
| uniconazole | florasulam | |

Particulary suitable fungicides are azoles or triazoles which contain a 1,2,4-triazole group.

In a particularly preferred embodiment, the pesticide is quinoxyfen, cyproconazole, epoxiconazole, florasulam, fenazaquin, oryzalin, isoxaben, glyphosate, (2[2-(3-trifluoromethyl)-5-chloro-2-pyridyloxymethyl)phenyl]-2-methoxyimino-N-methylacetamide, (N-[2-3,5-dimethylphenoxy)-1-methylethyl]-6-(tertiary butyl)-1,3,5-triazine-2,4-diamine or a mixture of two or more thereof.

Particularly preferred mixtures are mixtures of quinoxyfen and cyproconazole, mixtures of quinoxyfen and epoxiconazole, and mixtures of oryzalin, isoxaben and glyphosate.

By "adjuvant", is meant a substance which, when added to a formulation of a pesticide, increases its pesticidal efficacy, for example by improving its biological availability.

Whether or not a substance is an adjuvant can easily be determined by one skilled in the art, by using known methods for testing biological efficacy of a pesticide. If the addition of a substance to a pesticidal formulation increases the biological efficacy of the pesticide, then that substance is an adjuvant.

Particularly preferred adjuvants in accordance with the present invention are those known by the following trade names: Atplus 435, Atplus 263, Atplus 264, Atplus 450, Atplus 460, Atplus 469, Atplus 473, Atplus 474, Agrimul PG2067 and Agrimul PG2069, or a mixture of two or more thereof.

Agrimul PG2067 is a mixture of compounds of formula A and B where m is from 7 to 9.

Agrimul PG2069 is a mixture of compounds of formula A and B where m is from 8 to 10.

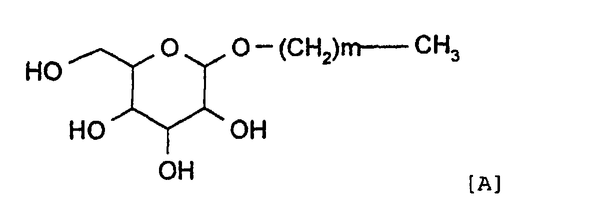

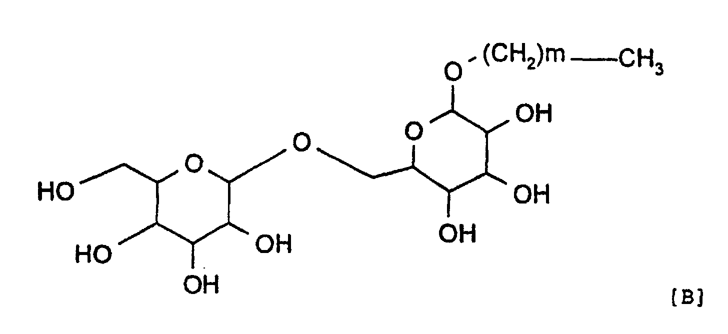

The Atplus surfactants are alkylpolysaccharide blends.

In one embodiment, the adjuvant is present to enhance the biological efficacy of the pesticide which is in particulate form. However, the adjuvant may be present to enhance the activity of a further pesticide in the dispersion, which may not be a particulate suspension. Accordingly, in an alternative embodiment, said formulation additionally comprises a further pesticide, wherein said adjuvant is an adjuvant for said further pesticide. The further pesticide may be dispersed or dissolved in an aqueous or non-aqueous phase, or itself formulated as a particulate suspension.

The amount of adjuvant to be employed is generally from 0.5 to 10 parts by weight based on the total weight of pesticide and preferably from 1 to 3 parts by weight based the total weight of the pesticide component(s) of the composition.

The amount of the pesticide for which the alkylpolyglycoside is an adjuvant is generally from 25 to 400 g/litre, preferably from 50 to 300 g/litre, based on the whole composition. The amount of additional pesticide present will generally be from 0 to 300 g/litre, preferably from 0 to 200 g/litre.

The amount of adjuvant to be employed based on the total composition is generally from 10 to 600 g/litre, preferably from 200 to 400 g/litre.

Conditions for storage may be any conditions appropriate to the formulation, but will generally be ambient conditions.

The formulation may include any suitable additives known in the art, for example, for example, antifreeze agents, surfactants e.g. anionic and nonionic surfactants, suspension aids (e.g. cellulosic suspension aids or xanthum gum suspensions), antifoams and biocides.

A number of preferred embodiments of the invention are described in the following Examples.

### Example 1

A particulate suspension of quinoxyfen and epoxiconazole was prepared as the following millbase:

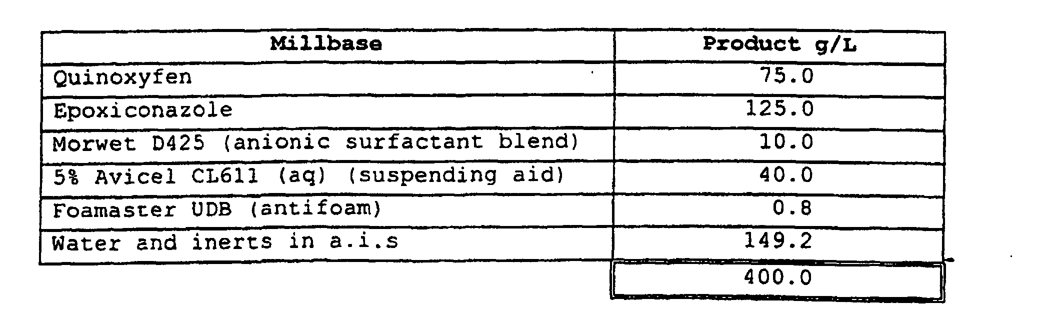

Atplus 435 was then added in the following postmill addition:

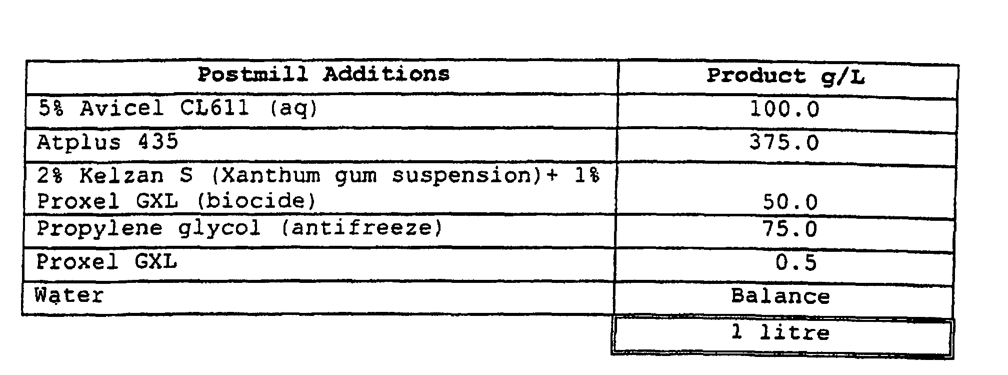

Accordingly, the nominal composition was:

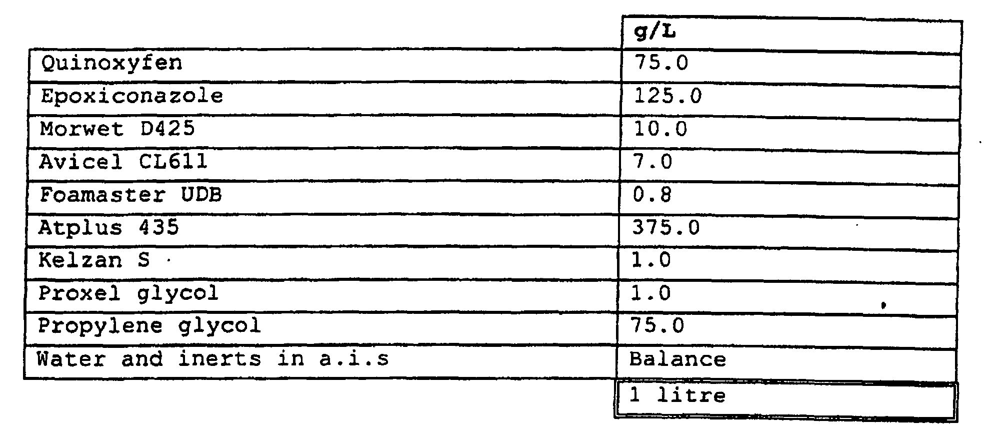

Samples of the formulation were stored in glass at various temperatures for up to 24 weeks. Particle size parameters were measured initially, at 4 weeks and at 24 weeks. The results are shown below in Table I:

**TABLE I**

| Storage Time | Storage Temp (°C) | Particle Size Parameters | | | | |
|---|---|---|---|---|---|---|
| | | 10%< (µm) | Median (µm) | 90%< (µm) | Span | Sp SA (sq.m/g) |
| **Initial** | Ambient | 0.39 | 1.73 | 6.79 | 3.70 | 6.5100 |

| **4 Weeks** | | | | | | |
|---|---|---|---|---|---|---|
| | -10 | 0.34 | 1.78 | 8.28 | 4.45 | 7.0367 |
| Daily cycle | -20/+5 | 0.35 | 1.69 | 8.15 | 4.61 | 7.0248 |
| Daily cycle | -5/+30 | 0.32 | 1.64 | 7.58 | 4.43 | 7.5011 |
| | Ambient | 0.36 | 1.74 | 7.98 | 4.38 | 6.8367 |
| | 40 | 0.32 | 1.72 | 7.96 | 4.44 | 7.3592 |

| **24 Weeks** | | | | | | |
|---|---|---|---|---|---|---|
| | -10 | 0.35 | 1.83 | 7.87 | 4.10 | 6.8840 |
| | Ambient | 0.32 | 1.70 | 8.72 | 4.93 | 7.3639 |
| | 30 | 0.34 | 1.79 | 12.26 | 6.67 | 6.9693 |
| | 40 | 0.35 | 2.06 | 19.10 | 9.12 | 6.6016 |
| Sp SA = specific surface area | | | | | | |

It was found that no significant crystal growth took place.

### Example 2

A particulate suspension of quinoxyfen and epoxiconazole was prepared as in Example 1 with various surfactants employed as adjuvants, namely Atlox 4991, Ethomeen C-25, Pluronic 10500 and Atplus 435. Initial median particle size was 1.24 µm.

Samples of the formulations were stored for two weeks at a 5/30°C daily cycle and at 40°C. The samples were inspected for signs of crystal growth after two weeks, and results are shown in Table II below:

**TABLE II**

| Chemical Class | Trade Name | Supplier | Microscope (x50) after storage (for 2 weeks) at | |
|---|---|---|---|---|
| | | | -5/+30°C daily cycle | 40°C |
| Alcohol ethoxylate | Atlox 4991 | ICI | 40um+ needles | No growth |
| Amine ethoxylate | Ethomeen C-25 | Akzo | 40um+ | 150um |
| Ethylene oxide/ propylene oxide copolymer | Pluronic 10500 | BASF | 40-50um needles | hint of growth |
| Alkylpolyglucoside | Atplus 435 | ICI | No change from initial particle size distribution | No growth |

The sample prepared with Atplus 435 was the only sample in which there was no crystal growth.

### Example 3

Samples of an epoxiconazole 500g/l suspension concentrate were separately tank mixed with Pluronic 10500 and Atplus 435 and were applied to wheat plants (Cv. Galahad) inoculated with Erysiphe graminis infection. The disease level was tested after 10 days treatment, and the results are shown in Table III below:

**TABLE III**

| Epoxiconazole SC+ | Disease level (%) |
|---|---|
| No adjuvant | 19 |
| Pluronic 10500 | <1.0 |
| Atplus 435 | <1.0 |

It can be seen that the biological efficacy of the formulation which included an adjuvant was significantly better than the formulation with no adjuvant. Furthermore, the alkyl polyglucoside adjuvant was found to be as effective as Pluronic 10500.

### Example 4

The effect of various alkyl polyglucoside adjuvants was measured on the biological efficacy of epoxiconazole against Erysiphe graminis. A formulation comprising 500g/l epoxiconazole as a suspension concentrate was tank mixed with adjuvant at a ratio of 1:3 epoxiconazole:adjuvant. The disease level was measured 5 days after treatment. Results are shown in Table IV below:

**TABLE IV**

| Epoxiconazole SC + | Disease level (%) |
|---|---|
| Atplus 435 | 3.1 |
| Atplus 263 | 1.9 |
| Atplus 264 | 2.9 |
| Atplus 450 | 3.8 |
| Atplus 460 | 3 |
| Atplus 469 | 2.7 |
| Atplus 473 | 4 |
| Atplus 474 | 3.85 |
| Agrimul PG2067 | 9.25 |
| Agrimul PG2069 | 6.8 |

In the absence of adjuvant infection levels of 32% were obtained. Untreated plants showed infection levels of 37% five days after treatment.

### Example 5

Aqueous dispersion formulations of quinoxyfen, florasulam and fenazaquin were prepared with Atlox 4991 and Atplus 435 as surfactants as shown below:

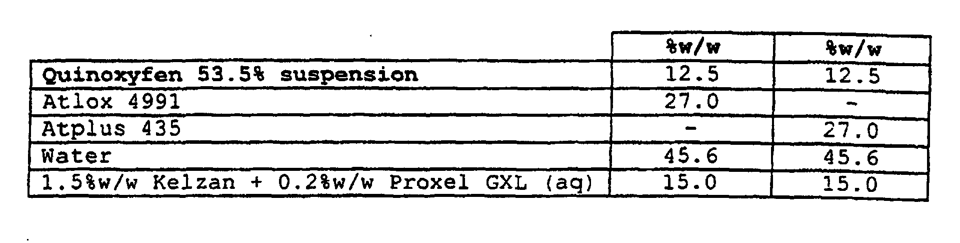

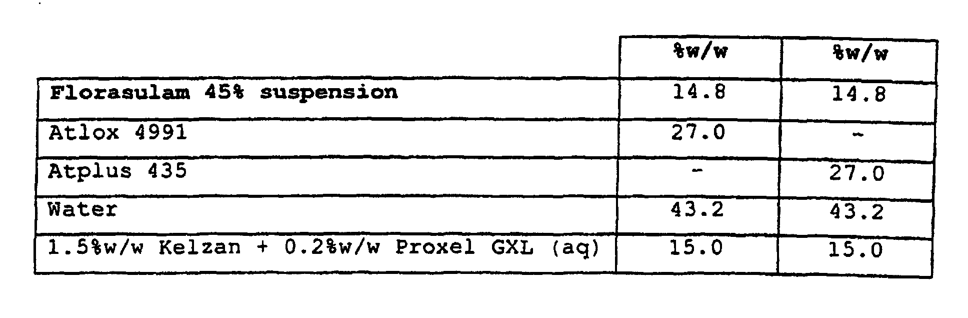

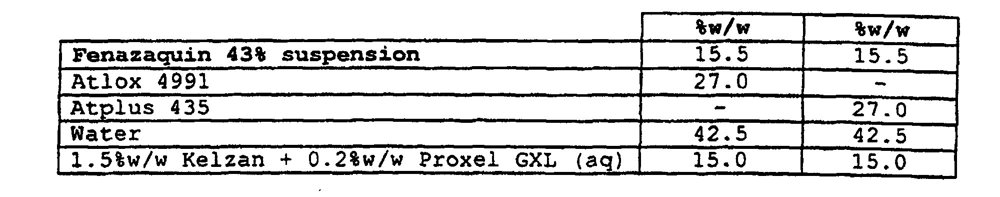

The suspension levels were adjusted to give 6.67 %w/w active ingredient in each mixture.

These samples were checked by microscopy after four weeks storage at various conditions. The results are shown in Table V below:

**TABLE V**

| Active ingredient | Surfactant | Microscope Appearance (x50) after 4 Weeks Storage at | |
|---|---|---|---|
| | | -5/+30°C daily cycle | 40°C |
| Quinoxyfen | Atlox 4991 | Growth up to 40µm | No growth |
| Quinoxyfen | Atplus 435 | No growth | No growth |
| Florasulam | Atlox 4991 | Growth up to 12µm | Growth up to 12µm |
| Florasulam | Atplus 435 | No growth | Trace of growth* |
| Fenazaquin | Atlox 4991 | Growth up to 12µm | Growth up to 12µm |
| Fenazaquin | Atplus 435 | No growth | Some growth up to 12µm - less than with Atlox 4991. |

Biological efficacy tests were not carried out. However, the use of Atplus 435 allows the above actives to be formulated with another active which is not readily biologically available without the use of an adjuvant, without promoting significant crystal growth.

### Example 6

A formulation of a mixture of oryzalin (240g/l), isoxaben (40g/l) and glyphosate (120g/l) was prepared, with Agrimul PG2067 (100g/l) as an adjuvant for glyphosate (oryzalin and isoxaben do not require an adjuvant). Oryzalin and isoxaben are present as aqueous particulate dispersions (and therefore are vulnerable to crystal growth), and glyphosate is dissolved in the aqueous continuous phase (as its triisopropylamine salt). Particle size analysis was carried out after 24 weeks at various conditions, and the results are shown below in Table VI:

**TABLE VI**

| | | Particle size (micron) | | |
|---|---|---|---|---|
| Storage Period | Storage Temperature °C | Median | 90%< | 10%< |
| Initial | Ambient | 1.31 | 3.93 | 0.24 |
| 24 Weeks | -10 | 1.27 | 4.14 | 0.20 |
| | 30 | 2.21 | 6.51 | 0.22 |
| | 40 | 2.45 | 7.52 | 0.21 |

### Example 7

A 10% formulation of (2[2-(3-trifluoromethyl)-5-chloro-2-pyridyloxymethyl)phenyl]-2-methoxyimino-N-methylacetamide (referred to as Compound 3 below) was prepared as an emulsifiable concentrate and its activity against powdery mildew on cereals was compared with the activity of a 10% suspension concentrate of Compound [3]. The suspension concentrate formulation was significantly less active, although its activity was restored by the addition of a wetting adjuvant. It has been found in various screening tests that Pluronic 10500 gives an excellent adjuvant effect, and this was therefore used as a comparator.

### Example 8

Field trials were carried out using a one-pack probe suspension concentrate formulation containing 50g/l of Compound 3 and 150g/l Pluronic 10500. This formulation was compared with an emulsion concentrate formulation of compound 3, and with a suspension concentrate containing Atplus 435 as a direct replacement for Pluronic 10500. Compositions are shown in Table VII below.

**TABLE VII**

| (amounts in grams) | SC (no adjuvant) | SC (10500) | SC (Atplus 435) | EC |
|---|---|---|---|---|
| Compound 3 | 50 | 50 | 50 | 100 |
| Morwet D425 | 5 | 5 | 5 | - |
| Pluronic 10500 | 5 | 5 | 5 | - |
| Foamaster UDB | 1.5 | 1.5 | 1.5 | - |
| Propylene glycol | 80 | - | - | - |
| Pluronic 10500 | - | 150 | - | - |
| Atplus 435 | - | - | 150 | - |
| Kelzan | 1.6 | 1.6 | 1.6 | - |
| Avicel | 9 | 9 | 9 | - |
| Water | to 1030 | to 1030 | to 1030 | - |
| Solvesso 200 (aromatic solvent) | - | - | - | 423 |
| N-methyl pyrrolidone (solvent) | - | - | - | 423 |
| Tensiofix B7453 | - | - | - | 54 |

It was found that all three formulations performed well in the field, but storage at 40°C caused unacceptable crystal growth with the Pluronic 10500 formulations.

### Example 9

The formulations prepared in Example 8 were also tested for curative and protective activity against Rust (Puccinia recondita) on winter wheat. The formulations comprising Atplus 435 and Pluronic 10500 gave efficacy similar to the emulsion concentrate formulation.

### Example 10

Small sub-samples of the field trial samples prepared for Example 8 were stored in glass vials at 40°C and at -10°C. The samples were evaluated after three months storage using a Malvern Mastersizer to determine the median size, and by visual characterisation under the microscope. Results are shown in Table VII below:

**TABLE VII**

| | 3m at -10°C | 3m at 40°C |
|---|---|---|
| (i) 50g/l SC (no adjuvant) | 1.20µm | 1.35µm small angular crystals |
| (ii) 50g/l SC + Pluronic 10500 | 1.43µm | 16.14µm large rhomboid or lozenge crystals |
| (iii) 50g/l SC + Atplus 435 | 1.35µm | 1.73µm small angular crystals with a few larger crystals |

### Example 11

Three formulations of the pesticide of N-[2-3,5-dimethylphenoxy)-1-methylethyl]-6-(tertiary butyl)-1,3,5-triazine-2,4-diamine (referred to below as Compound 6) as suspension concentrates in water were prepared with no added surfactant, 40 parts of Atplus 435 to 1 part Compound 6, and 40 parts of Tensiofix D03 (an alcohol alkoxylate adjuvant) to 1 part Compound 6 respectively.

The formulations had the following composition:

| SC concentrate: | Compound 6 | 52g technical |
|---|---|---|
| | Morwet D-425 | 5g |
| | Morwet EFW | 1g |
| | Water to | 100g |

This was milled to approximately 1.5µm median.

This concentrate was then mixed with adjuvants in following proportions and stored:

| | |
|---|---|
| Compound 6 concentrate | 5g |
| Adjuvant | 20g |
| Water to | 100g |

Samples of the formulations were stored for 1 month at ambient temperature, 40°C and 54°C, and then tested for particle size change. Results are shown in Table IX below:

**TABLE IX**

| Sample Reference | Storage Temperature (°C) | Particle Size (µm) | | | Microscopy |
|---|---|---|---|---|---|
| | | Median | 90% < | Span | |
| Initial SC sample | | 1.50 | 5.61 | 3.49 | |
| | | | | | |
| | Ambient | 1.55 | 4.98 | 2.96 | OK. No significant crystal growth |
| No added surfactant | 40 | 1.56 | 5.26 | 3.13 | OK. No significant crystal growth |
| | 54 | 1.41 | 4.07 | 2.60 | OK. No significant crystal growth |
| | | | | | |
| | Ambient | 1.36 | 3.88 | 2.58 | OK. No significant crystal growth |
| With Atplus 435 | 40 | 1.56 | 4.16 | 2.39 | OK. No significant crystal growth |
| | 54 | 1.63 | 4.60 | 2.52 | OK. No significant crystal growth |
| | | | | | |
| | Ambient | 1.51 | 4.30 | 2.51 | OK. No significant crystal growth |
| with Tensiofix D03 (an alcohol alkoxylate) | 40 | 2.03 | 5.65 | 2.48 | OK. Larger crystals apparent |
| | 54 | 3.47 | 8.94 | 2.39 | Very few agglomerates but larger crystals |

### Example 12

The formulations prepared in Example 11 were sprayed onto veronica persica (VERPE) veronica hederifolia (VERSE) and viola arvensis (VIOAR) at 0.8 and 3.2 g/ha with x % v/v adjuvant added to the spray tank water (sprayed at 200l/ha). The plants were assessed after 15 days for control of the weeds (expressed as % kill). Results are shown in Table X below:

**TABLE X**

| Compound /adjuvant | Rate of adjuvant | rate a.i per ha | Control of VERHE | Control of VERPE | Control of VIOAR |
|---|---|---|---|---|---|
| Atpius 435 | 0.125% | 0.8 | 13 | 1 | 26 |
| | 0.25 | 0.8 | 10.5 | 0 | 19.5 |
| | 0.375 | 0.8 | 8 | 6.5 | 40.5 |
| | 0.125 | 3.2 | 21.5 | 6 | 46.5 |
| | 0.25 | 3.2 | 13 | 4 | 48 |
| | 0.375 | 3.2 | 14.5 | 9.8 | 52 |
| Tensiofix D03 | 0.125% | 0.8 | 7 | 0 | 24.5 |
| | 0.25 | 0.8 | 10 | .5 | 27 |
| | 0.375 | 0.8 | 6.5 | 0 | 31 |
| | 0.125 | 3.2 | 16.5 | 3.5 | 58.5 |
| | 0.25 | 3.2 | 16.5 | 16.5 | 57 |
| | 0.375 | 3.2 | 14.5 | 18.5 | 53.5 |

It was found that Atplus 435 had a similar effect on biological efficacy as Tensiofix D03. No significant biological effect was observed in the absence of adjuvant at the rates shown in Table X.

### Example 13

Concentrates (suspensions in water) of cyproconazole and quinoxyfen were prepared separately as set out in (a) and (b) below via a wet milling (bead milling) process. These were then blended with the adjuvant (Atplus 435) and other components as set out in (c) below.
(a) Cyproconazole concentrate 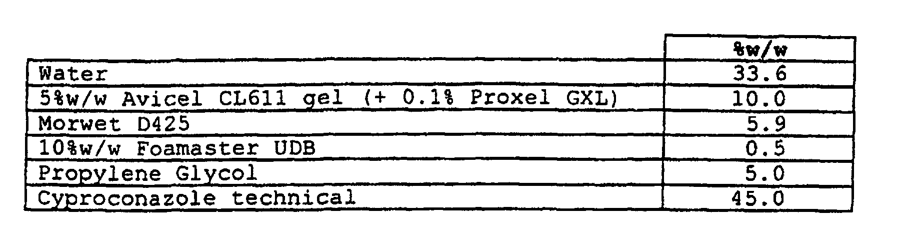
(b) Quinoxyfen concentrate

| **Ingredient** | **%w/w** |
|---|---|
| Quinoxyfen | 53.50 |
| Propylene Glycol | 5.30 |
| Avicel CL611 | 0.53 |
| Foamaster UDB | 0.13 |
| Kelzan S | 0.08 |
| Proxel GXL | 0.12 |
| Morwet D425 | 2.12 |
| Water plus inerts in Quinoxyfen technical | 38.22 |

(c) Concentration: 75g/l Quinoxyfen + 80g/l Cyproconazole

| **Final composition** | **%w/w** |
|---|---|
| Water | 24.04 |
| Propylene glycol | 5.50 |
| 1.5%w/w Kelzan S gel (+ 0.2% Proxel GXL) | 8.00 |
| 5%w/w Avicel CL-611 gel (+ 0.1% Proxel GXL) | 10.00 |
| Atplus 435 | 22.10 |
| Foamaster UDB | 1.00 |
| 53.5%w/w Quinoxyfen manufacturer's concentrate | 12.96 |
| 45%w/w Cyproconazole post mill | 16.40 |

Samples of the formulation were stored at various storage temperatures, and particle size parameters were measured, after two and 16 weeks storage. Results are shown below in Table XI:

**Table XI**

| Storage Time (weeks) | Storage Temp (°C) | Particle size parameters | | | |
|---|---|---|---|---|---|
| | | d(v, 0.5) (µm) | d(v, 0.1) µm | d(v, 0.9) µm | Span |
| Initial | Ambient | 2.41 | 0.31 | 11.95 | 4.82 |

| **2** | | | | | |
|---|---|---|---|---|---|
| | -10 | 1.59 | 0.28 | 6.39 | 3.85 |
| daily cycle | -5/30 | 2.10 | 0.30 | 8.23 | 3.78 |
| daily cycle | -20/5 | 2.02 | 0.30 | 7.93 | 3.78 |

| **16** | | | | | |
|---|---|---|---|---|---|
| | -10 | 2.04 | 0.29 | 8.9 | 4.22 |
| | 30 | 1.84 | 0.28 | 8.46 | 4.45 |
| | 40 | 1.98 | 0.29 | 8.61 | 4.20 |

### Example 14

Formulations of cyproconazole (200g/l) were prepared as suspension concentrates in water, with and without Atplus 435 as an adjuvant. The biological activity of the formulations was tested against Erysiphe graminis tritici infection, and results are shown in Table XII below:

| | % infection |
|---|---|
| Cyproconazole SC alone | 19.85 |
| 1:1 Cyproconazole SC + Atplus 435 | 0.90 |
| 1:3 Cyproconazole SC + Atplus 435 | 0.55 |
| Untreated plants | 20.00 |

It should be noted that biological activity of a suspension concentrate of quinoxyfen is not significantly increased by the addition of an adjuvant. Accordingly, the effect on the biological activity of cyproconazole only was tested.

## Claims

1. The use of an alkyl polyglycoside of general formula [1] 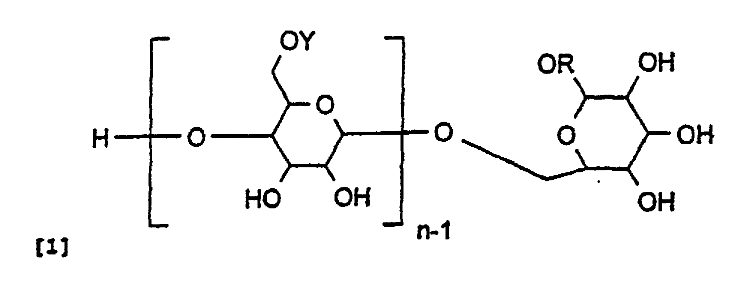 in a formulation comprising a particulate aqueous suspension of at least one pesticide having a solubility in water of not more than 600ppm, as a non-crystal-growth-promoting pesticidal adjuvant,
wherein
R is a C₄-C₂₀ alkyl group
n is from 1 to 10,
and Y is H, C₁-C₂₀ alkyl, or a group of the formula (C_{q}H_{2q}O)_{z}X, -SO₃M, -PO₃X₂, -COCH₂CH[SO₃M]COOX, -COX, -(CH₂)ₚCOOX, -CH₂CH₂SO₃M, -COOX, a quaternary ammonium derivative, or a glycerol residue,
wherein z is from 1 to 50
p is from 1 to 20
q is from 2 to 4
M is H or a suitable counter-ion,
and each X independently is H or C₁-C₂₀ alkyl.

2. The use as claimed in claim 1, wherein the pesticide has a solubility in water of nct more than 150ppm.

3. The use as claimed in claim 2, wherein the pesticide has a solubility in water of not more than 50ppm.

4. The use as claimed in any one of the preceding claims, wherein the pesticide has a melting point of at least 55°C.

5. The use as claimed in any one of the preceding claims, wherein the pesticide has a melting point of at least 77°C.

6. The use as claimed in any one of the preceding claims, wherein the pesticide has a melting point of at least 100°C.

7. The use as claimed in Claim 1, wherein the pesticide contains a 1,2,4-triazole group.

8. The use as claimed in any one of the preceding claims, wherein the pesticide is a compound of the formula [2]: 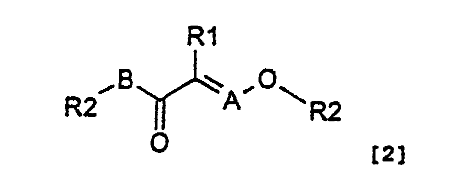 wherein R1 is an aromatic or heteraromatic group,
R2 is H, or C₁-C₁₀ alkyl
A is CH or N and
B is O or NH.

9. The use as claimed in Claim 8, wherein R1 is phenyl or substituted phenyl.

10. The use as claimed in Claim 8, wherein the pesticide is (2[2-(3-trifluoromethyl)-5-chloro-2-pyridyloxymethyl)phenyl]-2-methoxyimino-N-methylacetamide, kresoxim methyl, or azoxystrobin.

11. The use as claimed in Claim 1, wherein the pesticide is quinoxyfen, cyproccnazole, epoxiconazole, florasulam, fenazaquin, oryzalin, isoxaben, glyphosate, (2[2-(3-trifluoromethyl)-5-chloro-2-pyridylcxymethyl)phenyl]-2-methoxyimino-N-methylacetamide, N-[2-3,5-dimethylphenoxy)-1-methylethyl]-6-(tertiary butyl)-1,3,5-triazine-2,4-diamine, or a mixture of two or more thereof.

12. The use as claimed in Claim 11, wherein the pesticide is a mixture of quinoxyfen and epoxiconazole, a mixture of quinoxyfen and cyproconazole, or a mixture of oryzalin, isoxaben and glyphosate.

13. The use as claimed in any one of the preceding claims, wherein said formulation additionally comprises a further pesticide, wherein said adjuvant is an adjuvant for said further pesticide.

14. The use as claimed in any one of the preceding claims, wherein n is from 1 to 3.

15. The use as claimed in any one of the preceding claims, wherein R is a C₈-C₁₈ alkyl group.

16. The use as claimed in any one of the preceding claims, wherein Y is H.

17. The use as claimed in any one of the preceding claims, wherein the alkyl polyglucoside is Atplus 435, Atplus 263, Atplus 264, Atplus 450, Atplus 460, Atplus 469, Atplus 473, Atplus 474, Agrimul PG2067 and Agrimul PG2069, or a mixture of two or more thereof.

18. The use as claimed in any one of the preceding claims, wherein the amount of said adjuvant is from 0.5 to 10 parts by weight per part by weight of the total pesticide in the composition.

19. The use as claimed in Claim 18, wherein the amount of said adjuvant is from 1 to 3 parts by weight per part by weight of the total pesticide in the composition.

20. The use of an alkyl polyglycoside of general formula [1] 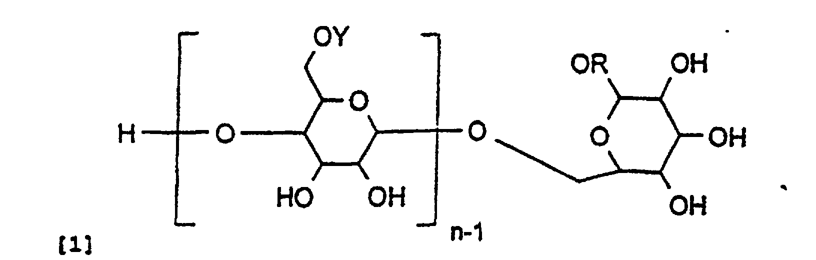 as a non-crystal-growth-promoting pesticidal adjuvant in an aqueous particulate suspension pesticide formulation, comprising quinoxyfen; epoxiconazole; florasulam; fenazaquin; oryzalin, isoxaben glyphosate; (2[2-(3-trifluoromethyl)-5-chloro-2-pyridyloxymethyl)phenyl]-2-methoxyimino-N-methylacetamide; (N-[2-3,5-dimethylphenoxy)-1-methylethyl]-6-(tertiary butyl)-1,3,5-triazine-2,4-diamine, or a mixture of two or more thereof:-
wherein
R is a C₄-C₂₀ alkyl group
n is from 1 to 10,
and Y is H, C₁-C₂₀ alkyl, or a group of the formula (C_{q}H_{2q}O)_{z} X, -SO₃M, -PO₃X₂, -COCH₂CH[SO₃M]COOX, -COX, -(CH₂)ₚCOOX, -CH₂CH₂SO₃M, -COOX, a quaternary ammonium derivative, or a glycerol residue,
wherein z is from 1 to 50
p is from 1 to 20
q is from 2 to 4
M is H or a suitable counter-ion,
and each X independently is H or C₁-C₂₀ alkyl.

21. The use of an alkyl polyglycoside of general formula [1] 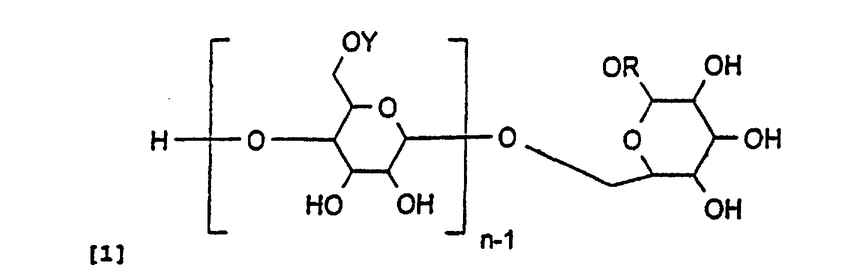 as a non-crystal-growth-promoting fungicidal adjuvant, in an aqueous particulate suspension formulation comprising quinoxyfen and cyproconazole,
wherein
R is a C₄-C₂₀ alkyl group
n is from 1 to 10,
and Y is H, C₁-C₂₀ alkyl, or a group of the formula (C_{q}H_{2q}O)_{z}X, -SO₃M, -PO₃X₂, -COCH₂CH[SO₃M]COOX, -COX, -(CH₂)ₚCOOX, -CH₂CH₂SO₃M, -COOX, a quaternary ammonium derivative, or a glycerol residue,
wherein z is from 1 to 50
p is from 1 to 20
q is from 2 to 4
M is H or a suitable counter-ion, and each X independently is H or C₁-C₂₀ alkyl.

22. The use of an alkyl polyglycoside of general formula [1] 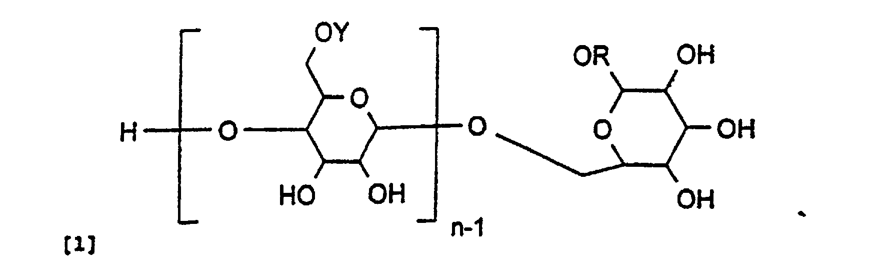 in a formulation comprising a particulate aqueous suspension of at least one pesticide having a solubility in water of not more than 600 ppm, as a non-crystal-growth-promoting pesticidal adjuvant,
wherein
R is a C₄-C₂₀ alkyl group
n is from 1 to 10,
and Y is H, C₁-C₂₀ alkyl, or a group of the formula (C_{q}H_{2q}O)₂X, -SO₃M, -PO₃X₂, -COCH₂CH[SO₃M]COOX, -COX, -(CH₂)ₚCOOX, -CH₂CH₂SO₃M, - COOX, a quaternary ammonium derivative, or a glycerol residue,
wherein z is from 1 to 50
p is from 1 to 20
q is from 2 to 4
M is H or a suitable counter-ion,
and each X independently is H or C₁-C₂₀ alkyl
but wherein said pesticide is not a mixture of quinoxyfen and cyproconazole.

23. A method of increasing the biological efficacy of a pesticidal active composition comprising a particulate aqueous suspension of at least one pesticide having a solubility in water of not more than 600 ppm, whilst preventing unacceptable crystal growth in the composition, which method comprises incorporating in the composition an alkyl polyglycoside of general formula [1] 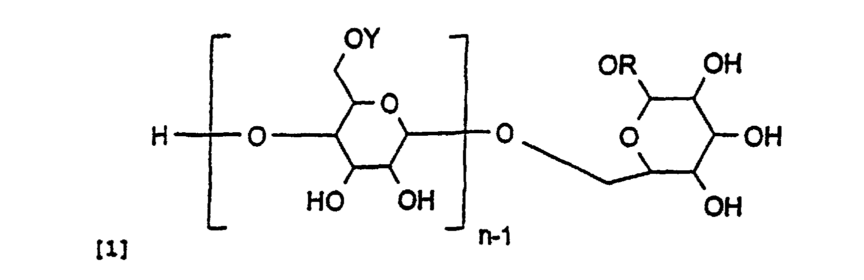 as a non-crystal-growth-promoting pesticidal adjuvant,
wherein
R is a C₄-C₂₀ alkyl group
n is from 1 to 10,
and Y is H, C₁-C₂₀ alkyl, or a group of the formula (C_{q}H_{2q}O)_{z}X, -SO₃M, -PO₃X₂, -COCH₂CH[SO₃M]COOX, -COX, -(CH₂)ₚCOOX, -CH₂CH₂SO₃M, -COOX, a quaternary ammonium derivative, or a glycerol residue,
wherein z is from 1 to 50
p is from 1 to 20
q is from 2 to 4
M is H or a suitable counter-ion,
and each X independently is H or C₁-C₂₀ alkyl.

## Patentansprüche

1. Verwendung eines Alkylpolyglykosids der allgemeinen Formel [1] 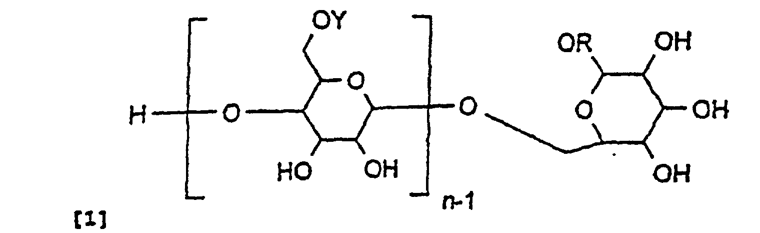 in einer Formulierung, umfassend eine wässrige Teilchensuspension von mindestens einem Pestizid mit einer Löslichkeit in Wasser von nicht mehr als 600 ppm als ein nichtkristallwachstumförderndes Pesitizidhilfsmittel,
worin
R eine C₄-C₂₀-Alkylgruppe ist,
n von 1 bis 10 ist
und Y H, C₁-C₂₀-Alkyl oder eine Gruppe der Formel (C_{q}H_{2q}O)_{z}X, -SO₃M,-PO₃X₂, -COCH₂CH[SO₃M]COOX, -COX, -(CH₂)ₚCOOX, -CH₂CH₂SO₃M,-COOX, ein quarternäres Ammoniumderivat oder ein Glycerinrest ist,
worin z von 1 bis 50 ist,
p von 1 bis 20 ist,
q von 2 bis 4 ist,
M H oder ein geeignetes Gegenion ist
und jedes X unabhängig H oder C₁-C₂₀-Alkyl ist.

2. Verwendung nach Anspruch 1, worin das Pestizid eine Löslichkeit in Wasser von nicht mehr als 150 ppm hat.

3. Verwendung nach Anspruch 2, worin das Pestizid eine Löslichkeit in Wasser von nicht mehr als 50 ppm hat.

4. Verwendung nach einem der vorhergehenden Ansprüche, worin das Pestizid einen Schmelzpunkt von mindestens 55 °C hat.

5. Verwendung nach einem der vorhergehenden Ansprüche, worin das Pestizid einen Schmelzpunkt von mindestens 77 °C hat.

6. Verwendung nach einem der vorhergehenden Ansprüche, worin das Pestizid einen Schmelzpunkt von mindestens 100 °C hat.

7. Verwendung nach Anspruch 1, worin das Pestizid eine 1,2,4-Triazolgruppe enthält.

8. Verwendung nach einem der vorhergehenden Ansprüche, worin das Pestizid eine Verbindung der Formel [2] ist: 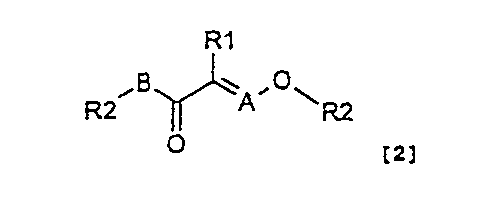 worin R1 eine aromatische oder heteroaromatische Gruppe ist,
R2 H oder C₁-C₁₀-Alkyl ist,
A CH oder N ist und
B O oder NH ist.

9. Verwendung nach Anspruch 8, worin R1 Phenyl oder substituiertes Phenyl ist.

10. Verwendung nach Anspruch 8, worin das Pestizid (2[2-(3-Trifluormethyl)-5-chlor-2-pyridyloxymethyl)phenyl]-2-methoxyimino-N-methylacetamid, Kresoximmethyl oder Azoxystrobin ist.

11. Verwendung nach Anspruch 1, worin das Pestizid Quinoxyfen, Cyproconazol, Epoxiconazol, Florasulam, Fenazaquin, Oryzalin, Isoxaben, Glyphosat, (2[2-(3-Trifluormethyl)-5-chlor-2-pyridyloxymethyl)phenyl]-2-methoxyimino-N-methylacetamid, N-[2-(3,5-Dimethylphenoxy)-1-methylethyl]-6-(tertiärbutyl)-1,3,5-triazin-2,4-diamin oder ein Gemisch von zwei oder mehreren davon ist.

12. Verwendung nach Anspruch 11, worin das Pestizid ein Gemisch von Quinoxyfen und Epoxiconazol, ein Gemisch von Quinoxyfen und Cyproconazol oder ein Gemisch von Oryzalin, Isoxaben und Glyphosat ist.

13. Verwendung nach einem der vorhergehenden Ansprüche, worin die. Formulierung zusätzlich ein weiteres Pestizid umfasst, worin das Hilfsmittel ein Hilfsmittel für das weitere Pestizid ist.

14. Verwendung nach einem der vorhergehenden Ansprüche, worin n von 1 bis 3 ist.

15. Verwendung nach einem der vorhergehenden Ansprüche, worin R eine C₈-C₁₈-Alkylgruppe ist.

16. Verwendung nach einem der vorhergehenden Ansprüche, worin Y H ist.

17. Verwendung nach einem der vorhergehenden Ansprüche, worin das Alkylpolyglucosid Atplus 435, Atplus 263, Atplus 264, Atplus 450, Atplus 460, Atplus 469, Atplus 473, Atplus 474, Agrimul PG2067 und Agrimul PG 2069 oder ein Gemisch von zwei oder mehreren davon ist.

18. Verwendung nach einem der vorhergehenden Ansprüche, worin die Menge des Hilfsmittels von 0,5 bis 10 Gewichtsteile pro Gewichtsteil des gesamten Pestizids in der Zusammensetzung ist.

19. Verwendung nach Anspruch 18, worin die Menge des Hilfsmittels von 1 bis 3 Gewichtsteile pro Gewichtsteil des gesamten Pestizids in der Zusammensetzung ist.

20. Verwendung eines Alkylpolyglycosids der allgemeinen Formel [1] 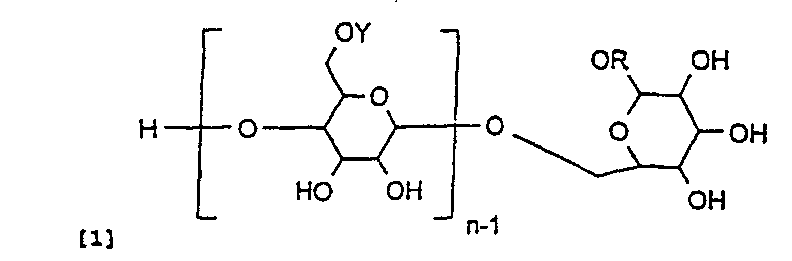 als ein nichtkristallwachstumförderndes Pestizidhilfsmittel in einer wässrigen Teilchensuspensionspestizidformulierung, umfassend Quinoxyfen; Epoxiconazol; Florasulam;Fenazaquin; Oryzalin, Isoxaben, Glyphosat; (2[2-(3-Trifluormethyl)-5-chlor-2-pyridyloxymethyl)phenyl]-2-methoxyimino-N-methylacetamid; (N-[2-(3,5-Dimethylphenoxy)-1-methylethyl]-6-(tertiärbutyl)-1,3,5-triazin-2,4-diamin oder ein Gemisch von zwei oder mehreren davon:
worin
R eine C₄-C₂₀-Alkylgruppe ist,
n von 1 bis 10 ist und
Y H, C₁-C₂₀-Alkyl oder eine Gruppe der Formel (C_{q}H_{2q}O)_{z}X, -SO₃M, -PO₃X₂, -COCH₂CH[SO₃M]COOX, -COX, -(CH₂)ₚCOOX, -CH₂CH₂SO₃M,-COOX, ein quarternäres Ammoniumderivat oder ein Glycerinrest ist,
worin z von 1 bis 50 ist,
p von 1 bis 20 ist,
q von 2 bis 4 ist,
M H oder ein geeignetes Gegenion ist
und jedes X unabhängig H oder C₁-C₂₀-Alkyl ist.

21. Verwendung eines Alkylpolygylcosids der allgemeinen Formel [1] 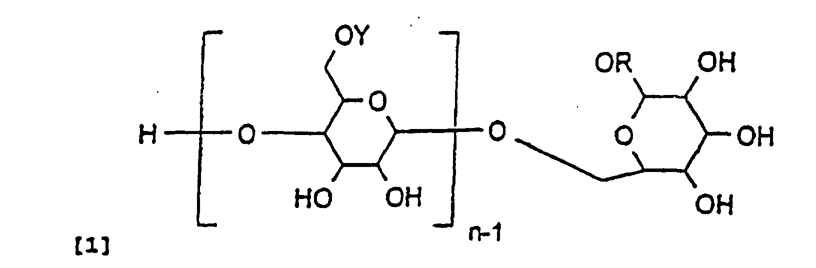 als ein nichtkristallwachstumförderndes Fungizidhilfsmittel in einer wässrigen Teilchensuspensionsformulierung, umfassend Quinoxyfen und Cyproconazol, worin
R eine C₄-C₂₀-Alkylgruppe ist,
n von 1 bis 10 ist
und Y H, C₁-C₂₀-Alkyl oder eine Gruppe der Formel (C_{q}H_{2q}O)_{z}X, -SO₃M,-PO₃X₂, -COCH₂CH[SO₃M]COOX, -COX, -(CH₂)ₚCOOX, -CH₂CH₂SO₃M,-COOX, ein quarternäres Ammoniumderivat oder ein Glycerinrest ist,
worin z von 1 bis 50 ist,
p von 1 bis 20 ist,
q von 2 bis 4 ist,
M H oder ein geeignetes Gegenion ist
und jedes X unabhängig H oder C₁-C₂₀-Alkyl ist.

22. Verwendung eines Alkylplyglycosids der allgemeinen Formel [1] 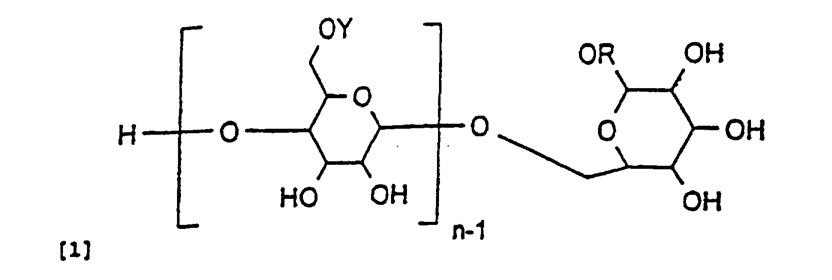 in einer Formulierung, umfassend eine wässrige Teilchensuspension von mindestens einem Pestizid mit einer Löslichkeit in Wasser von nicht mehr als 600 ppm als ein nichtkristallwachstumförderndes Pestizidhilfsmittel, worin
R eine C₄-C₂₀-Alkylgruppe ist,
n von 1 bis 10 ist
und Y H, C₁-C₂₀-Alkyl oder eine Gruppe der Formel (C_{q}H_{2q}O)_{z}X, -SO₃M,-PO₃X₂, -COCH₂CH[SO₃M]COOX, -COX, -(CH₂)ₚCOOX, -CH₂CH₂SO₃M,-COOX, ein quarternäres Ammoniumderivat oder ein Glycerinrest ist,
worin z von 1 bis 50 ist,
p von 1 bis 20 ist,
q von 2 bis 4 ist,
M H oder ein geeignetes Gegenion ist
und jedes X unabhängig H oder C₁-C₂₀-Alkyl ist, jedoch worin das Pestizid kein Gemisch von Quinoxyfen und Cyproconazol ist.

23. Verfahren zum Erhöhen der biologischen Wirksamkeit einer pestizid wirkenden Zusammensetzung, umfassend eine wässrige Teilchensuspension von mindestens einem Pestizid mit einer Löslichkeit in Wasser von nicht mehr als 600 ppm , wobei ein nicht vertretbares Kristallwachstum in der Zusammensetzung verhindert wird, wobei das Verfahren das Einbringen eines Alkylpolyglycosids der allgemeinen Formel [1] 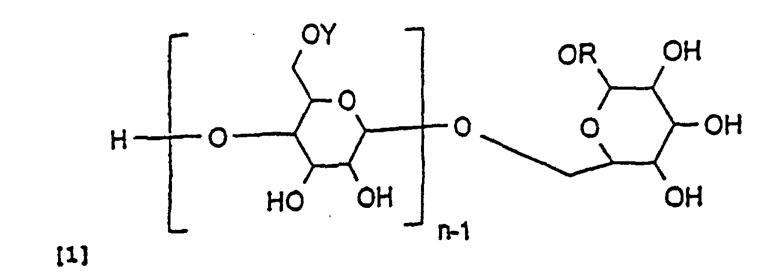 als ein nichtkristallwachstumförderndes Pestizidhilfsmittels in die Zusammensetzung umfasst, worin
R eine C₄-C₂₀-Alkylgruppe ist,
n von 1 bis 10 ist
und Y H, C₁-C₂₀-Alkyl oder eine Gruppe der Formel (C_{q}H_{2q}O)_{z}X, -SO₃M,-PO₃X₂, -COCH₂CH[SO₃M]COOX, -COX, -(CH₂)ₚCOOX, -CH₂CH₂SO₃M,-COOX, ein quarternäres Ammoniumderivat oder ein Glycerinrest ist,
worin z von 1 bis 50 ist,
p von 1 bis 20 ist,
q von 2 bis 4 ist,
M H oder ein geeignetes Gegenion ist
und jedes X unabhängig H oder C₁-C₂₀-Alkyl ist.

## Revendications

1. Utilisation en tant qu'adjuvant pesticide ne favorisant pas la croissance cristalline, dans une composition comprenant une suspension aqueuse de particules d'au moins un pesticide ayant une solubilité dans l'eau ne dépassant pas 600 ppm, d'un polyglucoside alkylé de formule générale [1] : 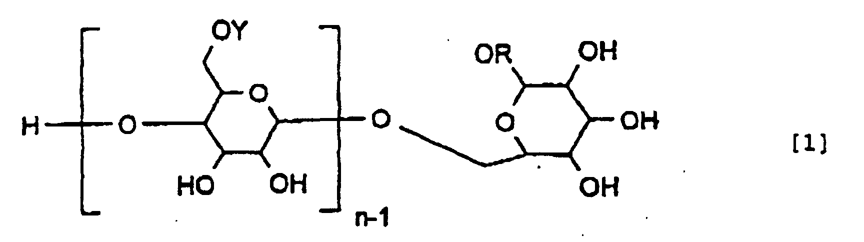 dans laquelle R représente un groupe alkyle en C₄ à C₂₀, n désigne un nombre de 1 à 10, et Y représente H, un groupe alkyle en C₁ à C₂₀, un groupe de formule (C_{q}H_{2q}O)_{z}X, -SO₃M, -PO₃X₂, -COCH₂CH[SO₃M]COOX, -COX, -(CH₂)ₚCOOX, -CH₂CH₂SO₃M ou -COOX, un reste de dérivé ammonium quaternaire ou un reste de glycérol, z désignant un nombre de 1 à 50, p un nombre de 1 à 20, q un nombre de 2 à 4, M représentant H ou un ion associé approprié et chaque X représentant indépendamment H ou un groupe alkyle en C₁ à C₂₀.

2. Utilisation selon la revendication 1, dans laquelle le pesticide est un pesticide ayant une solubilité dans l'eau ne dépassant pas 150 ppm.

3. Utilisation selon la revendication 2, dans laquelle le pesticide est un pesticide ayant une solubilité dans l'eau ne dépassant pas 50 ppm.

4. Utilisation selon l'une quelconque des revendications précédentes, dans laquelle le pesticide est un pesticide ayant un point de fusion d'au moins 55 °C.

5. Utilisation selon l'une quelconque des revendications précédentes, dans laquelle le pesticide est un pesticide ayant un point de fusion d'au moins 77 °C.

6. Utilisation selon l'une quelconque des revendications précédentes, dans laquelle le pesticide est un pesticide ayant un point de fusion d'au moins 100 °C.

7. Utilisation selon la revendication 1, dans laquelle le pesticide est un pesticide contenant un groupe 1,2,4-triazole.

8. Utilisation selon l'une quelconque des revendications précédentes, dans laquelle le pesticide est un composé de formule [2] : 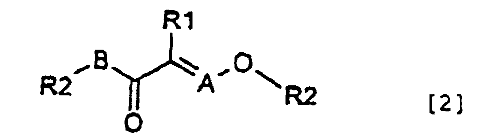 dans laquelle R1 représente un groupe aromatique ou hétéroaromatique, R2 représente H ou un groupe alkyle en C₁ à C₁₀, A représente CH ou N et B représente O ou NH.

9. Utilisation selon la revendication 8, dans laquelle R1 représente un groupe phényle ou un groupe phényle substitué.

10. Utilisation selon la revendication 8, dans laquelle le pesticide est le (2[2-(3-trifluorométhyl)-5-chloro-2-pyridyloxyméthyl)phényl]-2-méthoxyimino-N-méthylacétamide, le krésoxim méthyl ou l'azoxystrobin.

11. Utilisation selon la revendication 1, dans laquelle le pesticide est le quinoxyfen, le cyproconazole, l'époxiconazole, le florasulam, le fénazaquin, l'oryzalin, l'isoxaben, le glyphosate, le (2[2-(3-trifluorométhyl)-5-chloro-2-pyridyloxyméthyl)phényl]-2-méthoxyimino-N-méthylacétamide, la N-[2-(3,5-diméthylphénoxy)-1-méthyléthyl]-6-(butyl tertiaire)-1,3,5-triazine-2,4-diamine, ou un mélange de deux ou plus de deux de ces composés.

12. Utilisation selon la revendication 11, dans laquelle le pesticide est un mélange de quinoxyfen et d'époxiconazole, un mélange de quinoxyfen et de cyproconazole ou un mélange d'oryzalin, d'isoxaben et de glyphosate.

13. Utilisation selon l'une quelconque des revendications précédentes, où ladite composition comprend en plus un autre pesticide, ledit adjuvant étant un adjuvant pour ledit autre pesticide.

14. Utilisation selon l'une quelconque des revendications précédentes, où n est un nombre de 1 à 3.

15. Utilisation selon l'une quelconque des revendications précédentes, où R est un groupe alkyle en C₈ à C₁₈.

16. Utilisation selon l'une quelconque des revendications précédentes, où Y représente H.

17. Utilisation selon l'une quelconque des revendications précédentes, dans laquelle le polyglucoside alkylé est Atplus 435, Atplus 263, Atplus 264, Atplus 450, Atplus 460, Atplus 469, Atplus 473, Atplus 474, Agrimul PG2067, Agrimul PG2069, ou un mélange de deux ou plus de deux de ces produits.

18. Utilisation selon l'une quelconque des revendications précédentes, où la quantité dudit adjuvant est de 0,5 à 10 parties en poids par partie en poids de pesticide total de la composition.

19. Utilisation selon la revendication 18, où la quantité dudit adjuvant est de 1 à 3 parties en poids par partie en poids de pesticide total de la composition.

20. Utilisation en tant qu'adjuvant pesticide ne favorisant pas la croissance cristalline, dans une composition pesticide sous forme de suspension aqueuse de particules comprenant du quinoxyfen, de l'époxiconazole, du florasulam, du fénazaquin, de l'orysalin, de l'isoxaben, du glyphosate, du (2[2-(3-trifluorométhyl)-5-chloro-2-pyridyl-oxyméthyl)phényl]-2-méthoxyimino-N-méthylacétamide, de la N-[2-(3,5-diméthylphénoxy)-1-méthyléthyl]-6-(butyl tertiaire)-1,3,5-triazine-2,4-diamine, ou un mélange de deux ou plus de deux de ces produits, d'un polyglucoside alkylé de formule générale [1] : 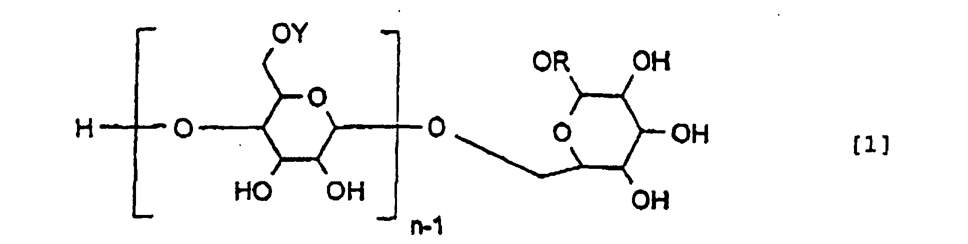 dans laquelle R représente un groupe alkyle en C₄ à C₂₀, n désigne un nombre ayant une valeur de 1 à 10, et Y représente H, un groupe alkyle en C₁ à C_{20,} un groupe de formule (C_{q}H_{2q}O)₂X, -SO₃M, -PO₃X₂, -COCH₂CH [SO₃M] COOX, -COX, -(CH₂)ₚCOOX, -CH₂CH₂SO₃M ou -COOX, un reste de dérivé ammonium quaternaire ou un reste de glycérol, z désignant un nombre de 1 à 50, p un nombre de 1 à 20 et q un nombre de 2 à 4, M représentant H ou un ion associé approprié et chaque X représentant indépendamment H ou un groupe alkyle en C₁ à C₂₀.

21. Utilisation en tant qu'adjuvant fongicide ne favorisant pas la croissance cristalline, dans une composition qui est une suspension aqueuse de particules comprenant du quinoxyfen et du cyproconazole, d'un polyglucoside alkylé de formule générale [1] : 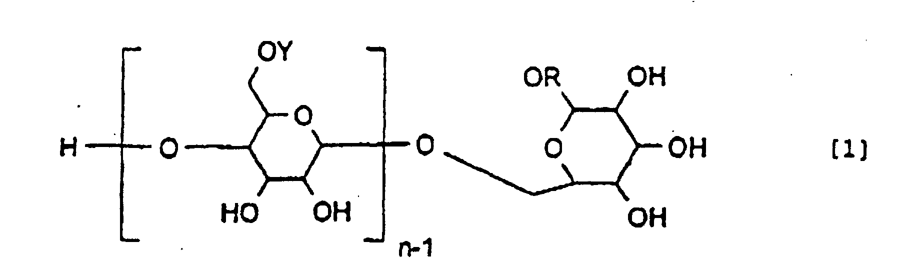 dans laquelle R représente un groupe alkyle en C₄ à C₂₀, n désigne un nombre de 1 à 10 et Y représente H, un groupe alkyle en C₁ à C₂₀, un groupe de formule (C_{q}H_{2q}O)_{z}X, -SO₃M, -PO₃X₂, -COCH₂CH[SO₃M]COOX, -COX, -(CH₂)ₚCOOX, -CH₂CH₂SO₃M ou -COOX, un reste de dérivé ammonium quaternaire ou un reste de glycérol, z désignant un nombre de 1 à 50, p un nombre de 1 à 20 et q un nombre de 2 à 4, M représentant H ou un ion associé approprié et chaque X représentant indépendamment H ou un groupe alkyle en C₁ à C₂₀.

22. Utilisation comme adjuvant pesticide ne favorisant pas la croissance cristalline, dans une composition comprenant une suspension aqueuse de particules d'au moins un pesticide ayant une solubilité dans l'eau ne dépassant pas 600 ppm, ledit pesticide n'étant pas un mélange de quinoxyfen et de cyproconazole, d'un polyglucoside alkylé de formule générale [1] : 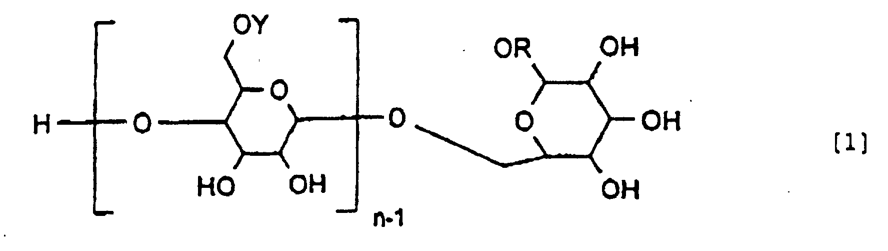 dans laquelle R représente un groupe alkyle en C₄ à C₂₀, n désigne un nombre de 1 à 10, et Y représente H, un groupe. alkyle en C₁ à C₂₀, un groupe de formule (C_{q}H_{2q}O)_{z}X, -SO₃M, -PO₃X₂, -COCH₂CH[SO₃M]COOX, -COX, -(CH₂)ₚCOOX, -CH₂CH₂SO₃M ou -COOX, un reste de dérivé ammonium quaternaire ou un reste de glycérol, z désignant un nombre de 1 à 50, p un nombre de 1 à 20 et q un nombre de 2 à 4, M représentant H ou un ion associé approprié et chaque X représentant indépendamment H ou un groupe alkyle en C₁ à C₂₀.

23. Procédé pour augmenter l'efficacité biologique d'une composition pesticide active, comprenant une suspension aqueuse de particules d'au moins un pesticide ayant une solubilité dans l'eau ne dépassant pas 600 ppm, tout en évitant une croissance cristalline inacceptable dans la composition, procédé qui comprend l'incorporation à la composition d'un polyglucoside alkylé de formule générale [1] : 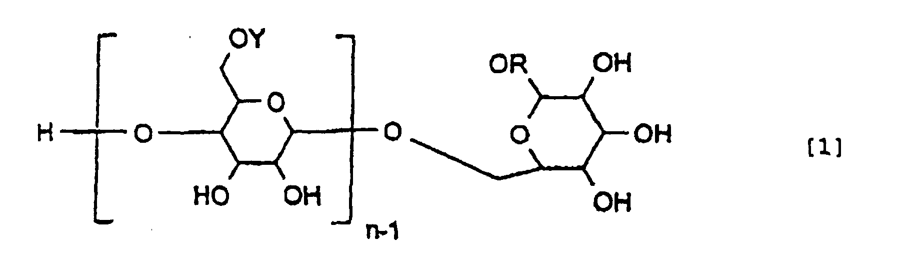 dans laquelle R représente un groupe alkyle en C₄ à C₂₀, n est un nombre de 1 à 10, et Y représente H, un groupe alkyle en C₁ à C₂₀, un groupe de formule (C_{q}H_{2q}O)_{z}X, -SO₃M, -PO₃X₂, -COCH₂CH[SO₃M]COOX, -COX, -(CH₂)ₚCOOX, -CH₂CH₂SO₃M ou -COOX, un reste de dérivé ammonium quaternaire ou un reste de glycérol, z désignant un nombre de 1 à 50, p un nombre de 1 à 20 et q un nombre de 2 à 4, M représentant H ou un ion associé approprié et chaque X représentant indépendamment H ou un groupe alkyle en C₁ à C₂₀,
en tant qu'adjuvant pesticide ne favorisant pas la croissance cristalline.
